# EUROPEAN PATENT APPLICATION

(11) **EP 3 213 613 A1**
(43) Date of publication of application: **06.09.2017**
(21) Application number: 17157992.3
(22) Date of filing: 24.02.2017
(51) Int. Cl.: A01B 33/16

(54) **TILLER**

(30) Priority: 26.02.2016 JP 2016035075
(71) Applicant: Honda Motor Co., Ltd., Minato-ku, Tokyo 107-8556 (JP)
(72) Inventor: ITO, Tomoki, Saitama, 351-0193 (JP); KOBAYASHI, Hideaki, Saitama, 351-0193 (JP)
(74) Representative: Feller, Frank

(57) **Abstract**

The present invention provides a tiller that can suppress fluctuation in tilling depth of a tilling claw during tilling. There is provided a tiller (10) including a machine body (12) including a drive source (11), a power transmission member (13) extending forward and downward from the machine body (12) and provided substantially in the center of width of the machine body, and a tilling claw (15) that performs tilling with power transmitted from the drive source via the power transmission member (13). To a case (40) of the power transmission member (13), a tilling depth stabilizing member (30) linearly extending toward soil along the case is fixed. A distal end portion (32) of the tilling depth stabilizing member (30) comes into contact with the soil in a position same as or in front of a rotation center (18) of the tilling claw (15) with respect to an advancing direction of the tiller (10).

## Description

### BACKGROUND OF THE INVENTION

### Field of the Invention

The present invention relates to a self-propelled tiller.

### Description of the Related Art

There is known a tiller operated by an operator standing behind a machine body. The machine body includes a drive source and a tilling claw. The tilling claw performs tilling with power from the drive source. As a related art concerning such a tiller, a technique is disclosed in Japanese Patent Laid-Open No. 2014-117199.

A tiller disclosed in Japanese Patent Laid-Open No. 2014-117199 includes an engine functioning as a drive source and a transmission that transmits power from the engine to a tilling claw. The transmission extends forward and downward from the machine body and is located substantially in the center of machine body width. An auxiliary wheel that adjusts tilling depth is provided in front of the tilling claw. A handlebar for an operator to grip is provided behind the machine body. The machine body includes traveling wheels driven by the drive source. The operator moves the tiller and performs tilling while operating the machine body with the handlebar.

During the tilling, the rotating tilling claw may hit hard soil. At this point, force is applied to the tilling claw in a direction away from the soil, which may alter the tilling depth of the tilling claw.

In order to fix the tilling depth of the tilling claw, for example, it is conceivable to shift the center of gravity of the machine body to the front. However, operability of the tiller is deteriorated if the center of gravity is shifted away from the handlebar. If the tilling claw is replaced by a tilling claw having a sharp tip to enable the tilling claw to more easily cut into the soil, wear of the tilling claw is accelerated and durability of the tilling claw is deteriorated.

It is desired to make it possible to fix the tilling depth of the tilling claw during the tilling without changing characteristics and components of the tiller.

An object of the present invention is to provide a tiller that can suppress fluctuation in tilling depth of a tilling claw during tilling.

### SUMMARY OF THE INVENTION

According to a first aspect of the present invention, there is provided a tiller including: a machine body including a drive source; a power transmission member extending forward and downward from the machine body and provided substantially in the center of width of the machine body; and a tilling claw that performs tilling with power transmitted from the drive source via the power transmission member. To a case of the power transmission member, a tilling depth stabilizing member linearly extending toward soil along the case is fixed. A distal end portion of the tilling depth stabilizing member comes into contact with the soil in a position same as or in front of a rotation center of the tilling claw with respect to an advancing direction of the tiller.

In a second aspect of the present invention, in the tiller, preferably, the distal end portion has a blade shape and narrows toward a distal end with respect to a thickness direction, a narrowing part is located downward, and the distal end portion narrows toward the distal end with respect to a longitudinal direction.

In a third aspect of the present invention, in the tiller, preferably, the tilling depth stabilizing member is capable of sliding along the case.

In the first aspect, the power transmission member coupled to the drive source extends forward and downward from the machine body. To the case of the power transmission member, the tilling depth stabilizing member linearly extending toward the soil along the case is fixed. The distal end portion of the tilling depth stabilizing member comes into contact with the soil in the position same as or in front of the rotation center of the tilling claw with respect to an advancing direction of the tiller.

During the tilling, when the distal end portion of the tilling depth stabilizing member comes into contact with the soil, the distal end portion receives force in a rearward and downward direction from the soil. The force is transmitted to the tilling claw as well via the case of the power transmission member that fixes the tilling depth stabilizing member. In other words, during the tilling, the force is applied to the tilling claw in the rearward and downward direction. The force is applied to the tilling claw to press the tilling claw against the soil. Therefore, displacement in a direction in which the tilling claw moves away from the soil is suppressed. As a result, it is possible to suppress fluctuation in the tilling depth of the tilling claw.

In addition, the tilling depth stabilizing member is located substantially in the center of the machine body width. Therefore, the force applied to the tiller from the tilling depth stabilizing member does not deviate to the left and the right. Even when the force is applied to the tiller from the tilling depth stabilizing member, an operator can stably perform the tilling without losing left and right balance.

In the second aspect, the distal end portion of the tilling depth stabilizing member has the blade shape and narrows toward the distal end with respect to the thickness direction, the narrowing part is located downward, and the distal end portion narrows toward the distal end with respect to the longitudinal direction. In other words, since the distal end portion is sharpened toward a distal end direction and a direction close to the soil, the distal end portion easily intrudes into the soil. On the other hand, an upper part of the distal end portion relatively widens. During the tilling, since the wide upper part comes into contact with the soil, the distal end portion receives large resistance from the soil. Therefore, the tilling depth stabilizing member intruding into the soil less easily slips out. As a result, during the tilling, the tilling depth stabilizing member easily intrudes into the soil and less easily slips out from the soil. In other words, the tilling depth stabilizing member easily receives a rearward and downward force and the tilling claw is easily pressed against the soil. It is possible to further suppress the fluctuation in the tilling depth of the tilling claw.

In the third aspect, the tilling depth stabilizing member is capable of sliding along the case of the power transmission member. In other words, it is possible to adjust an interval between the tilling depth stabilizing member and the soil. Since the length of the intrusion of the distal end portion into the soil can be adjusted, it is possible to adjust a contact state of the soil and the tilling depth stabilizing member. As a result, it is possible to adjust the magnitude of the force that the tilling depth stabilizing member receives from the soil.

### BRIEF DESCRIPTION OF THE DRAWINGS

Figure 1 is a perspective view of a tiller according to an embodiment of the present invention;
Figure 2 is a main part enlarged view of the tiller shown in Figure 1;
Figure 3 is a front view of a lower part of the tiller shown in Figure 2;
Figures 4(a) to 4(c) are three orthographic views of a tilling depth stabilizing member shown in Figure 3;
Figure 5 is an exploded perspective view of a case of a power transmission member and the tilling depth stabilizing member shown in Figure 3;
Figure 6 is a side view of the case of the power transmission member and the tilling depth stabilizing member shown in Figure 5; and
Figure 7 is an action diagram of the tiller shown in Figure 1.

### DETAILED DESCRIPTION OF THE PREFERRED EMBODIMENTS

An embodiment of the present invention is explained below with reference to the accompanying drawings. Note that, in the explanation, the left and the right indicate the left and the right with respect to an operator of a tiller and the front and the rear indicate the front and the rear with respect to an advancing direction of the tiller. In the figure, Fr indicates the front, Rr indicates the rear, L indicates the left viewed from the operator, R indicates the right viewed from the operator, Up indicates upward, and Dn indicates downward. Embodiment

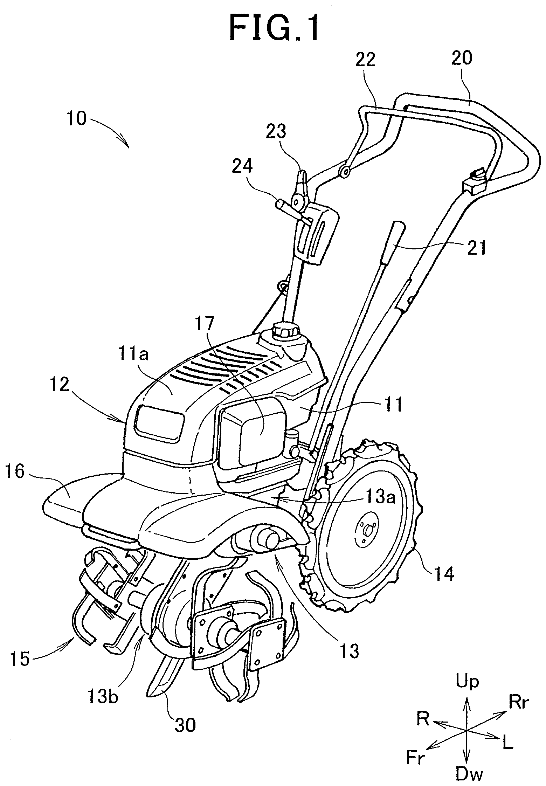

Reference is now made to Figure 1. In Figure 1, a self-propelled tiller 10 according to an embodiment of the present invention is shown. The tiller 10 includes a machine body 12 including an engine 11 (a drive source 11), a transmission 13 provided in a lower part of the machine body 12, traveling wheels 14 (only the traveling wheel 14 on the left side is shown) rotatably provided in a rear part 13a of the transmission 13, a tilling claw 15 rotatably provided in a front part 13b of the transmission 13, a fender 16 that covers a substantially entire range above the tilling claw 15, a handlebar 20 and a first lever 21 extending rearward and upward from a rear part of the machine body 12, second to fourth levers 22 to 24 provided in upper parts of the handlebar 20, and a tilling depth stabilizing blade 30 (a tilling depth stabilizing member 30) provided in the front part 13b of the transmission 13.

The engine 11 is covered by an engine cover 11a from above. An air cleaner 17 is attached to a side of the engine 11.

The first lever 21 performs adjustment of speed of the traveling wheels 14 and switching of rotating speed of the tilling claw 15. The second lever 22 performs switching of transmission of power from the engine 11 to the traveling wheels 14 and the tilling claw 15. The third lever 23 performs adjustment of the number of revolutions of the engine 11. The fourth lever 24 performs switching of a differential function of the transmission 13. The operator performs tilling work by operating the first to fourth levers 21 to 24 together with the handlebar 20.

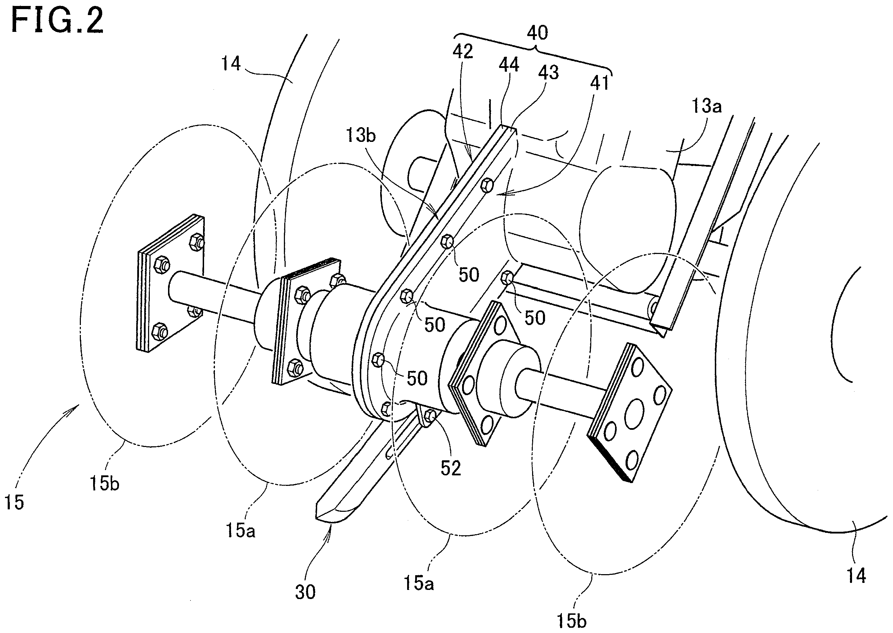

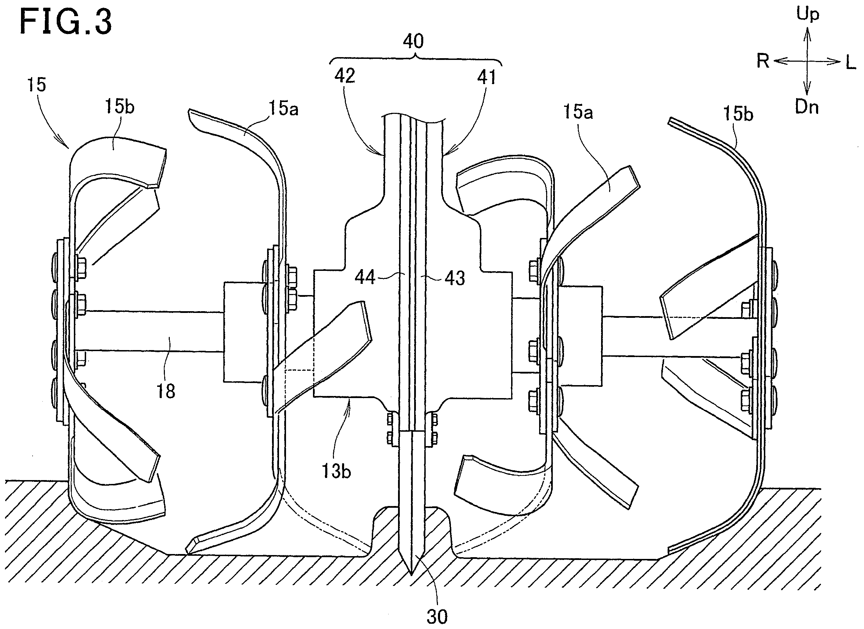

Figures 2 and 3 are referred to. In the front part 13b of the transmission 13, a rotating shaft 18 extending in the width direction (the left-right direction) of the machine body 12 (see Figure 1) is provided. The tilling claw 15 includes a plurality of tilling claws 15a and 15b fixed to the rotating shaft 18. The tilling claws 15a on the inner side rotate in a direction opposite to a rotating direction of the tilling claws 15b on the outer side with respect to the front part 13b of the transmission 13.

A case 40 of the front part 13b of the transmission 13 includes a first case half body 41 and a second case half body 42. The first and second case half bodies 41 and 42 respectively include first and second flanges 43 and 44. The first and second flanges 43 and 44 are laid on top of the other and fastened by a plurality of bolts 50.

The tilling depth stabilizing blade 30 linearly extending toward the soil along the first and second flanges 43 and 44 is fixed to the case 40.

The front part 13b of the transmission 13 is located substantially in the center in the width direction of the machine body 12 (see Figure 1). Similarly, the tilling depth stabilizing blade 30 is also located substantially in the center in the width direction of the machine body 12.

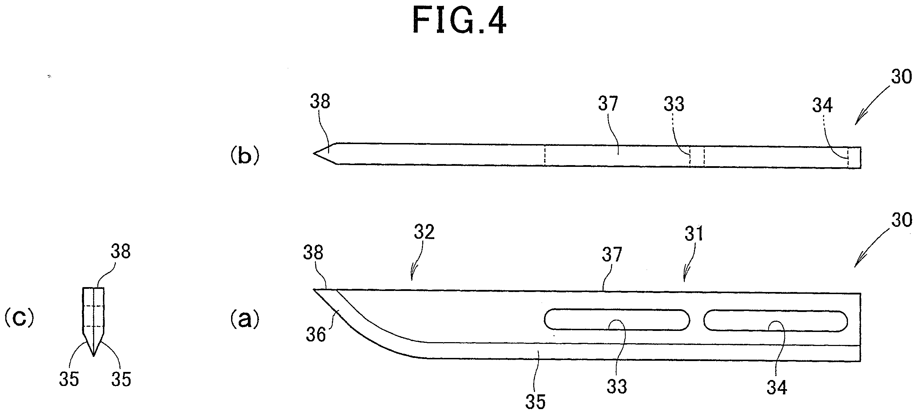

Figures 4(a) to 4(c) are referred to. The shape of the tilling depth stabilizing blade 30 is explained. The tilling depth stabilizing blade 30 includes a main body section 31 that has a substantially long plate shape and a distal end portion 32 that is formed at one end of the main body section 31 and has a blade shape.

In a side view (see Figure 4(a)), the main body section 31 has a substantially rectangular shape. The distal end portion 32 has a right-angled triangular shape, the hypotenuse of which faces down. In the main body section 31, first and second long holes 33 and 34 for fixing the tilling depth stabilizing blade 30 to the case 40 (see Figure 2) are formed. The first and second long holes 33 and 34 respectively assume track shapes extending in the longitudinal direction. In a boundary between a lower part 35 of the main body section 31 and a hypotenuse part 36 of the distal end portion 32, the lower part 35 and the hypotenuse part 36 are continuous as a smooth curved line.

The tilling depth stabilizing blade 30 has a symmetrical shape in front view (see Figure 4(c)). An upper part 37 of the tilling depth stabilizing blade 30 is a plane. A lower part 35 of the main body section 31 is formed to narrow toward the lower end. In other words, the lower end of the tilling depth stabilizing blade 30 has a pointed shape in front view.

The distal end portion 32 narrows toward the distal end with respect to the thickness direction. A narrowing part is located downward (see Figures 4(a) and 4(c)). Further, the distal end portion 32 narrows toward the distal end with respect to the longitudinal direction (see Figure 4(b)). In other words, in the distal end portion 32, the hypotenuse part 36, which is the hypotenuse of the right-angled triangle, has a pointed shape and an end part 38 in the longitudinal direction also has a pointed shape.

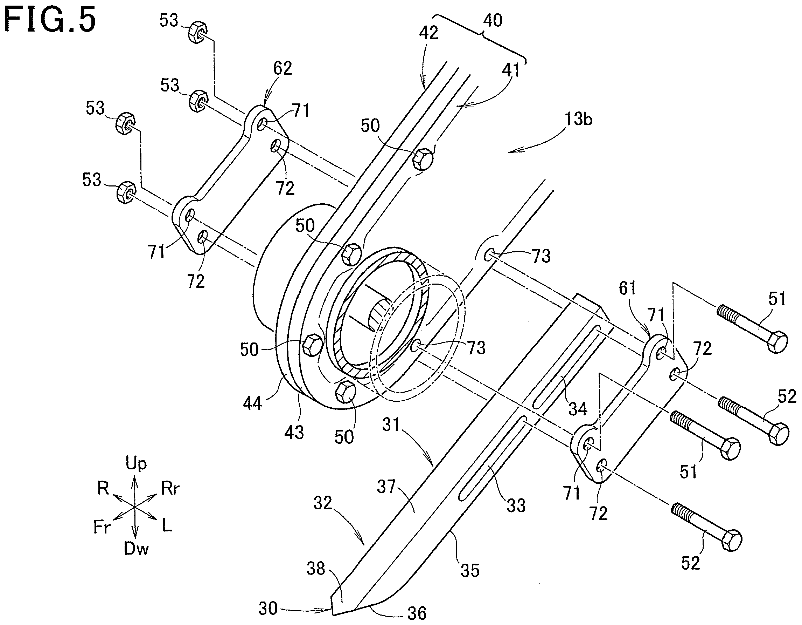

Reference is now made to Figure 5. A method of fixing the tilling depth stabilizing blade 30 to the case 40 is explained. The tilling depth stabilizing blade 30 is sandwiched between first and second fixing plates 61 and 62 and fixed to the case 40.

First, the fixing of the first and second fixing plates 61 and 62 to the case 40 is explained. Both of the first and second fixing plates 61 and 62 assume a substantially rectangular shape. In the first fixing plate 61, two first bolt holes 71 and two second bolt holes 72 are formed. Similarly, in the second fixing plate 62, two first bolt holes 71 and two second bolt holes 72 are formed.

A first bolt 51 is inserted through the first bolt hole 71 formed in the first fixing plate 61, third bolt holes 73 formed in the first and second flanges 43 and 44, and the first bolt hole 71 formed in the second fixing plate 62 and is fastened to a nut 53 on the second fixing plate 62 side. The other first bolt 51 is fastened in the same way. Explanation of the fastening is omitted.

Consequently, the first and second fixing plates 61 and 62 are fixed to the case 40 to sandwich the first and second flanges 43 and 44. In other words, the first bolts 51 fix the first and second fixing plates 61 and 62 to the case 40 and fix the first and second case half bodies 41 and 42 each other.

Fixing of the tilling depth stabilizing blade 30 to the first and second fixing plates 61 and 62 is explained. The tilling depth stabilizing blade 30 is disposed to be sandwiched by the first and second fixing plates 61 and 62. A second bolt 52 is inserted through the second bolt hole 72 formed in the first fixing plate 61, the first long hole 33 formed in the main body section 31 of the tilling depth stabilizing blade 30, and the second bolt hole 72 formed in the second fixing plate 62 and fastened to the nut 53 on the second fixing plate 62 side.

The other second bolt 52 is inserted through the second bolt hole 72 formed in the first fixing plate 61, the second long hole 34 formed in the main body section 31 of the tilling depth stabilizing blade 30, and the second bolt hole 72 formed in the second fixing plate 62 and fastened to the nut 53 on the second fixing plate 62 side.

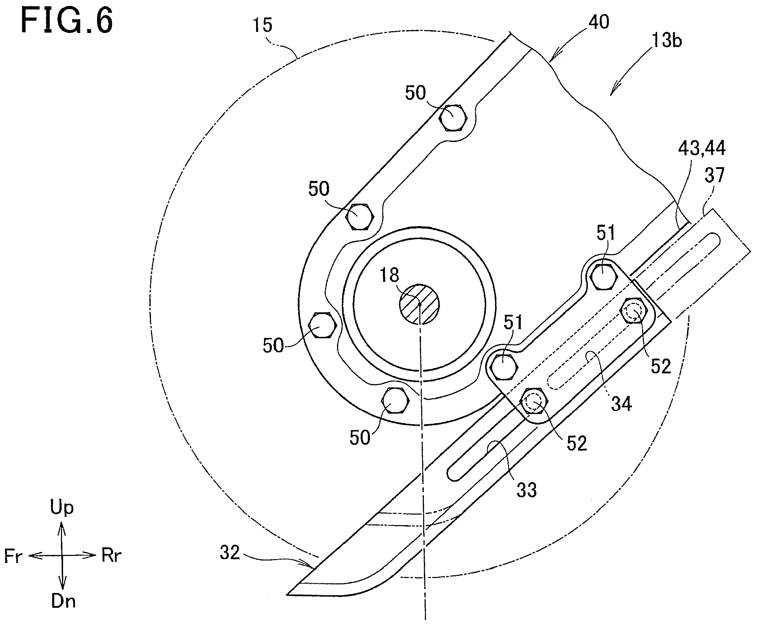

Reference is now made to Figure 6. In a state in which the tilling depth stabilizing blade 30 is fixed to the case 40, the tilling depth stabilizing blade 30 extends in a direction same as a direction in which the case 40 extends from the machine body 12 (see Figure 1). The upper part 37 of the tilling depth stabilizing blade 30 extending in the longitudinal direction and the first and second flanges 43 and 44 are separated. Note that the tilling depth stabilizing blade 30 may be fixed to the case 40 in a state in which the upper part 37 of the tilling depth stabilizing blade 30 is in contact with the first and second flanges 43 and 44.

The distal end portion 32 of the tilling depth stabilizing blade 30 is capable of coming into contact with the soil ahead of the center of the rotating shaft 18 of the tilling claw 15 with respect to an advancing direction of the tiller 10 (see Figure 1).

The tilling depth stabilizing blade 30 is capable of sliding along the case 40. Specifically, the fastened second bolts 52 is loosened, the tilling depth stabilizing blade 30 is slid along the first and second long holes 33 and 34, and the second bolts 52 are fastened again.

Action and effects of the present invention are explained.

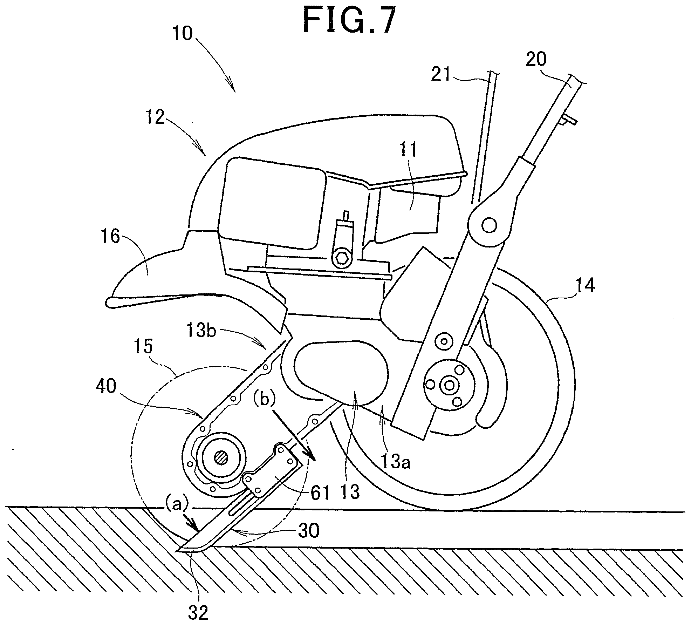

Figures 6 and 7 are referred to. The transmission 13 coupled to the engine 11 extends forward and downward from the machine body 12. To the case 40 of the transmission 13, the tilling depth stabilizing blade 30 linearly extending toward the soil along the case 40 is fixed. The distal end portion 32 of the tilling depth stabilizing blade 30 comes into contact with the soil ahead of the center of the rotating shaft 18 of the tilling claw 15 with respect to the advancing direction of the tiller 10.

As indicated by an arrow (a), during the tilling, when the distal end portion 32 of the tilling depth stabilizing blade 30 comes into contact with the soil, the distal end portion 32 receives force from the soil in a rearward and downward direction. As indicated by an arrow (b), the force that the distal end portion 32 receives from the soil is transmitted to the tilling claw 15 as well via the case 40 of the transmission 13 that fixes the tilling depth stabilizing blade 30. In other words, during the tilling, force is applied to the tilling claw 15 in the rearward downward direction. Since the force is applied to the tilling claw 15 to press the tilling claw 15 against the soil, displacement of the tilling claw 15 in a direction away from the soil is suppressed. As a result, it is possible to suppress fluctuation in tilling depth of the tilling claw 15.

In addition, the tilling depth stabilizing blade 30 is capable of sliding along the case 40 of the transmission 13. Specifically, the fastened second bolts 52 is loosened, the tilling depth stabilizing blade 30 is slid along the first and second long holes 33 and 34, and the second bolts 52 are fastened again. Consequently, it is possible to adjust an interval between the tilling depth stabilizing blade 30 and the soil. Since length of intrusion of the distal end portion 32 into the soil can be adjusted, it is possible to adjust a contact state of the soil and the tilling depth stabilizing blade 30. As a result, it is possible to adjust the magnitude of the force (the arrow (a)) that the tilling depth stabilizing blade 30 receives from the soil.

Reference is now made to Figure 5 as well. The first bolts 51 fix the first and second fixing plates 61 and 62 to the first and second flanges 43 and 44 and fix the first and second case half bodies 41 and 42 each other. In other words, the first and second fixing plates 61 and 62 are fixed by the first bolts 51 together with the first and second case half bodies 41 and 42. Therefore, in the fixing of the tilling depth stabilizing blade 30, it is possible to suppress an increase in the number of components.

Reference is now made to Figure 3. The tilling depth stabilizing blade 30 is located substantially in the center in the width direction of the machine body 12 (see Figure 1). Therefore, the force applied to the tiller 10 from the tilling depth stabilizing blade 30 does not deviate to the left and the right. Even when the force is applied to the tiller 10 from the tilling depth stabilizing blade 30, the operator can stably perform the tilling without losing left and right balance.

Figures 4(a) to 4(c) are referred to as well. The distal end portion 32 of the tilling depth stabilizing blade 30 has the blade shape and narrows toward the distal end with respect to the thickness direction, the narrowing part is located downward, and the distal end portion 32 narrows toward the distal end with respect to the longitudinal direction. In other words, since the end part 38 and the hypotenuse part 36 of the distal end portion 32 are sharpened toward a distal end direction and a direction close to the soil, the distal end portion 32 easily intrudes into the soil. On the other hand, the upper part 37 of the distal end portion 32 is wider than the hypotenuse part 36. During the tilling, since the wide upper part 37 comes into contact with the soil, the distal end portion 32 receives large resistance from the soil. Therefore, the tilling depth stabilizing blade 30 intruding into the soil less easily slips out. As a result, during the tilling, the tilling depth stabilizing blade 30 easily intrudes into the soil and less easily slips out from the soil. In other words, the tilling depth stabilizing blade 30 easily receives a rearward and downward force (see the arrow (a) in Figure 7) and the tilling claw 15 is easily pressed against the soil. It is possible to further suppress the fluctuation in the tilling depth of the tilling claw 15.

Note that, in this embodiment, the tilling depth stabilizing blade is provided in the tiller including the tilling claw and the traveling wheels. However, the tilling depth stabilizing blade may be provided in a tiller not including traveling wheels. For example, the tilling depth stabilizing blade may be provided in a tiller in which a tilling claw is provided in a lower part of a machine body and the machine body moves according to rotation of the tilling claw. In other words, the present invention is not limited to the embodiment as long as the action and effects of the present invention are achieved.

The tilling depth stabilizing blade of the present invention is suitable for a self-propelled tiller including traveling wheels.

The present invention provides a tiller that can suppress fluctuation in tilling depth of a tilling claw during tilling. There is provided a tiller (10) including a machine body (12) including a drive source (11), a power transmission member (13) extending forward and downward from the machine body (12) and provided substantially in the center of width of the machine body, and a tilling claw (15) that performs tilling with power transmitted from the drive source via the power transmission member (13). To a case (40) of the power transmission member (13), a tilling depth stabilizing member (30) linearly extending toward soil along the case is fixed. A distal end portion (32) of the tilling depth stabilizing member (30) comes into contact with the soil in a position same as or in front of a rotation center (18) of the tilling claw (15) with respect to an advancing direction of the tiller (10).

### Reference signs list

- 10: tiller
- 11: engine
- 12: machine body
- 13: transmission (13b transmission front part)
- 14: traveling wheel
- 15: tilling claw
- 18: rotating shaft
- 30: tilling depth stabilizing blade
- 31: main body section
- 32: distal end portion
- 33: first long hole
- 34: second long hole
- 35: lower part
- 36: hypotenuse part
- 37: upper part
- 38: end part
- 40: case
- 41: first case half body
- 42: second case half body
- 43: first flange
- 44: second flange
- 51: first bolt
- 52: second bolt
- 61: first fixing plate
- 62: second fixing plate

## Claims

1. A tiller comprising:
a machine body (12) including a drive source (11);
a power transmission member (13) extending forward and downward from the machine body and provided substantially in a center of width of the machine body; and
a tilling claw (15) that performs tilling with power transmitted from the drive source via the power transmission member, **characterized in that**
to a case (40) of the power transmission member, a tilling depth stabilizing member (30) linearly extending toward soil along the case is fixed, and
a distal end portion (32) of the tilling depth stabilizing member comes into contact with the soil in a position same as or in front of a rotation center (18) of the tilling claw with respect to an advancing direction of the tiller.

2. The tiller according to claim 1, wherein the distal end portion has a blade shape and narrows toward a distal end with respect to a thickness direction, a narrowing part is located downward, and the distal end portion narrows toward the distal end with respect to a longitudinal direction.

3. The tiller according to claim 1 or 2, wherein the tilling depth stabilizing member is capable of sliding along the case.
